# EUROPEAN PATENT SPECIFICATION

(11) **EP 1 398 609 B1**
(45) Date of publication and mention of the grant of the patent: **22.02.2006**
(21) Application number: 03020010.9
(22) Date of filing: 03.09.2003
(51) Int. Cl.: G01L 23/22

(54) **Method of setting the knock detection sensor of a piston engine**
Verfahren zum Einstellen eines Klopfdetektors in einem Kolbenmotor
Procédé de réglage d'un système de détection de cliquetis dans un moteur à pistons

(30) Priority: 12.09.2002 FI 20021634
(43) Date of publication of application: 17.03.2004
(73) Proprietor: Wärtsilä Finland Oy, 65380 Vaasa (FI)
(72) Inventor: Saikkonen, Ari, 65200 Vaasa (FI)
(74) Representative: Zipse + Habersack

(56) References cited:
- WO-A-02/04800
- US-A- 5 419 180
- US-A- 6 062 199

## Description

The invention relates to a method of setting the knock detection system of a multi-cylinder piston engine into active state, the detection system comprising at least of a sensor arranged in connection with each cylinder and a measurement circuit in connection therewith as described in the preamble of claim 1.

Knocking as a phenomenon is known as such and it is detrimental for both the operation of the engine and the durability of the construction. It is important for unobstructed operation of the engine that the engine runs correctly, for example so that fuel ignition timing is not incorrect.

It is known in the art to use suitable sensors in connection with cylinders for detecting engine knocking, as disclosed in WO 02/04800. Acceleration sensors can, among others, be used for this purpose. Acceleration sensors use a piezoresistive crystal that generates voltage on the basis of dynamic mechanical pressure.

One problem associated with instrumentation of cylinders is, among others, that the properties, effects and operation sensitivity of the sensors and cabling are not quite identical in different units and, further, sensitivity can also change during use. Thus, the reliability of measurement can sometimes be somewhat dubious. Further, calibration of the system has in the past demanded a considerable amount of manual labour.

It is an aim of the present invention to provide a method of setting the knock detection system in an operation state that minimizes the problems associated with prior art. It is an especial aim of the invention to provide a method of setting the knock detection system into an operation state by means of which for the problems caused, for example, by individual differences between the sensors can be minimized.

In a method according to the invention for setting the knock detection system of a piston engine, especially one using the otto process, into operation state in connection with a multi-cylinder engine, the detection system comprising at least a sensor arranged in connection with each cylinder and measurement circuit in connection therewith, the engine is run at a certain load, the load being less than full load, while the output signal of each sensor is simultaneously set between certain preset limits by adjusting one or more adjustment variables of the measurement circuit. Subsequent to this, the value for said at least one or more value adjustment variable for each cylinder is stored into the detection system. In normal use the engine is run and the one or more stored value for adjustment variable for each cylinder is used in the knock detection system. Preferably the gain of each measurement circuit is used as adjustment variable.

In a method according to the invention, the output of the measurement circuit for each cylinder is preferably set at the equal level by adjusting the gain of each measurement circuit for each cylinder at a time

Additionally in the method, average data is determined from the outputs of each sensor, the average data being then compared with the preset setpoint of the output. The measurement circuit gain of each cylinder is then adjusted so that the determined average data is about the same size as the setpoint of the output. The value of the gain for the sensor of the measurement circuit for each cylinder is stored in the detection system.

The knock detection system is set in connection with startup and/or running under load.

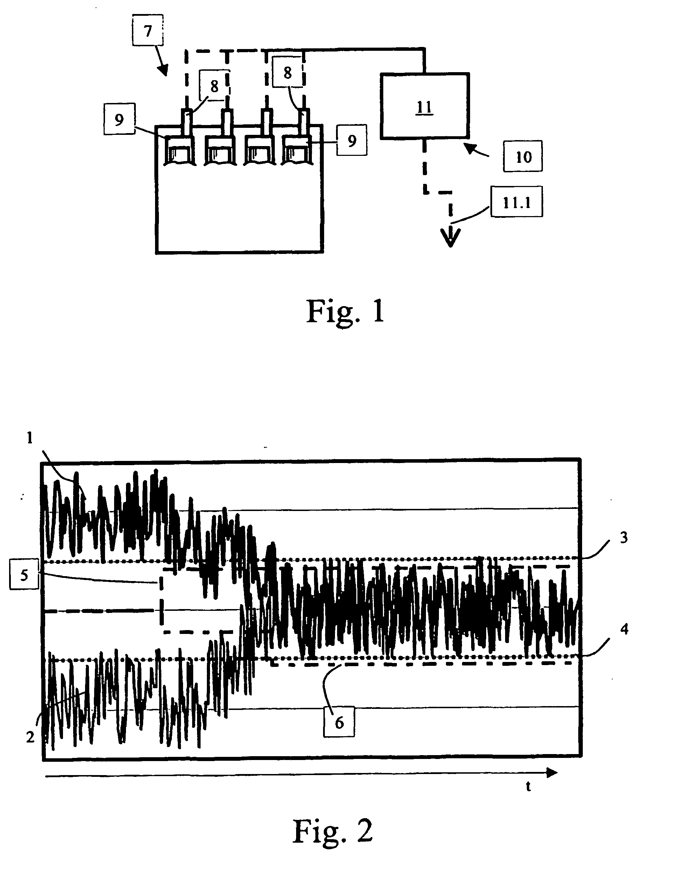

In the following the invention is described by way of example and with reference to the appended drawings,
of which figure 1 is a schematic illustration of a piston engine using a method according to the invention, and
figure 2 is a schematic illustration of the setting procedure of a knock detection system in a method according to the invention.

An engine using the method according to the invention is in figure 1 referred to with reference number 1. The engine can be an otto engine, known as such. An acceleration sensor 8 is arranged in connection with the compression volume of the cylinder 9 of the engine 7. The acceleration sensor is further connected to the measurement circuit 11 comprising means for processing the signal from the acceleration sensor and is further connected to other systems monitoring and controlling the operation of the engine at least so that it has at least one output 11.1. In this case, each cylinder is provided with a sensor 8 and a measurement circuit 11 connected thereto. The measurement circuit 11 is here shown as a separate component for the clarity of illustration, but it can also be a part of the other engine management systems. It can also be integrated with sensor 8.

According to the invention, the knock detection system setting procedure is arranged at such an engine drive situation where it is quite sure there is no knocking. Preferably, the engine is during this time run at a constant load, whereby the conditions of the combustion and engine operation stay about constant as well. A suitable load is about 50 - 80 % of the engine maximum load. The detection system comprises a sensor 8 arranged in connection with the cylinder of the engine, the measurement variable of the sensor having a dependent relationship with the knocking of the engine. An acceleration sensor, for example, can preferably be used as such a sensor. As the engine runs, the sensors emit a signal to the detection system and the amplitude of signal depends on the magnitude of knocking. In the figure, reference numbers 1 and 2 illustrate an exemplary signal from sensors in two cylinders during the method according to the invention. The strength of the gain of the sensor is illustrated in graphs 5 and 6, where the graph 5 is the gain for sensor 2 and the graph 6 is the gain of sensor 1. The method has a certain window 3, 4 for the limits of the signal of the sensor. When the engine is running at a constant load, the gain 6 of the sensor 1 of the first cylinder is set so as to be within the window 3, 4. After this, the gain 5 of the sensor 2 of the second cylinder is changed so as to place this signal as well within the window 3, 4.

The detection system correspondingly checks the gain of sensor of all cylinders and sets their strength so as to maintain the signal strength within the window 3, 4. After this, the output signals of all sensors are on a mutually corresponding level and the engine can be run as the conditions demand. In normal use the knock detection system 10 uses in each sensor the gain determined by means of the above procedure. The knock detection system 10 will detect an abnormal level of engine knock and will also locate the cylinder in which the problem occurs.

The invention is not limited to the embodiment described here, but a number of modifications thereof can be conceived of within the scope of the appended claims.

## Claims

1. A method of setting the knock detection system (10) of a piston engine (7) into operation state in connection with a multi-cylinder engine, the detection system comprising at least a sensor (8) arranged in connection with each cylinder (9) and a measurement circuit (11) in connection therewith, wherein the engine (7) is run at a certain load, the load being less than full load, **characterised in that** in the method
- the output signal (1, 2, 11.1) of each separate sensor (8) is set between certain preset limits (3, 4) by adjusting one or more of the adjustment variables (5, 6) of the measurement circuit (6),
- the value for said one or more adjustment variable from each separate cylinder (9) is stored in the detection system (10),
- in normal use the engine (7) is run and the one or more stored value for adjustment variable for each cylinder (9) is used in the knock detection system (10).

2. A method according to claim 1, **characterised in that** in the method the output signal (1, 2, 11.1) of the measurement circuit (11) of each sensor (8) is set on the equal level by means of adjusting the gain of the measurement circuit (6) of the sensor of each cylinder at a time.

3. A method according to claim 1, **characterised in that** in the method average data is determined from the output (11.1) of each sensor (8), the average data being compared to the setpoint value of the output and the gain of the measurement circuit of the sensor of each cylinder is adjusted so that the determined average data is the same as the setpoint value of the output.

4. A method according to any of preceding claims, **characterised in that** the value of gain of the measurement circuit (11) of the sensor for each cylinder is stored in the detection system to be used for detecting engine knock by means of the detection system during normal use of the engine (7).

5. A method according to any of preceding claims, **characterised in that** the knock detection system (11) is set in connection with startup and/or running under load.

6. A method according to claim 5, **characterized in that** the knock detection system setting procedure is carried out in connection with every startup.

## Patentansprüche

1. Verfahren zum Setzen des Klopfdetektionssystems (10) eines Kolbenmotors (7) in den Betriebszustand in Verbindung mit einer Mehrzylindermaschine, wobei das Detektionssystem mindestens einen Sensor (8), der in Verbindung mit jedem Zylinder (9) angeordnet ist, und eine damit verbundene Messschaltung (11) umfasst, wobei der Motor (7) bei einer gewissen Last, die kleiner als die Volllast ist, betrieben wird, **dadurch gekennzeichnet, dass** in dem Verfahren
- das Ausgangssignal (1, 2, 11.1) jedes getrennten Sensors (8) zwischen gewissen voreingestellten Grenzen (3, 4) festgelegt wird, indem eine oder mehrere Einstellvariable (5, 6) der Messschaltung (6) eingestellt werden;
- der Wert der einen oder mehreren Einstellvariablen von jedem getrennten Zylinder (9) im Detektionssystem (10) gespeichert wird;
- der Motor (7) im normalen Gebrauch betrieben wird und der eine gespeicherte Wert oder die mehreren gespeicherten Werte für die Einstellvariable für jeden Zylinder (9) im Klopfdetektionssystem (10) verwendet wird.

2. Verfahren nach Anspruch 1, **dadurch gekennzeichnet, dass** im Verfahren das Ausgangssignal (1, 2, 11.1) der Messschaltung (11) jedes Sensors (8) mittels der Einstellung der Verstärkung der Messschaltung (6) des Sensors jedes Zylinders zu einer gewissen Zeit auf den gleichen Pegel festgesetzt wird.

3. Verfahren nach Anspruch 1, **dadurch gekennzeichnet, dass** im Verfahren aus dem Ausgangssignal (11.1) jedes Sensors (8) gemittelte Daten bestimmt werden; wobei die gemittelten Daten mit einem Sollwert des Ausgangssignals verglichen werden, und die Verstärkung der Messschaltung des Sensors jedes Zylinders so eingestellt wird, dass der bestimmte mittlere Datenwert gleich dem Sollwert des Ausgangssignals ist.

4. Verfahren nach einem der vorhergehenden Ansprüche, **dadurch gekennzeichnet, dass** der Wert der Verstärkung der Messschaltung (11) des Sensors für jeden Zylinder im Detektionssystem gespeichert wird, um für die Detektion des Klopfens der Maschine mittels der Vorrichtung des Detektionssystems während des normalen Gebrauchs des Motors (7) verwendet zu werden.

5. Verfahren nach einem der vorhergehenden Ansprüche, **dadurch gekennzeichnet, dass** das Klopfdetektionssystem (11) in Verbindung mit dem Anlaufen und/oder dem Betrieb unter Last eingestellt wird.

6. Verfahren nach Anspruch 5, **dadurch gekennzeichnet, dass** das Einstellverfahren des Klopfdetektionssystems in Verbindung mit jedem Anlaufen ausgeführt wird.

## Revendications

1. Procédé de mise en service du système de détection de cliquetis (10) d'un moteur polycylindrique à pistons (7), le système de détection comportant au moins un capteur (8) raccordé à chaque cylindre (9) et un circuit de mesure (11) connecté à chaque capteur, le moteur (7) tournant à une certaine charge, la charge étant inférieure à la pleine charge,
**caractérisé par le fait que**
- le signal de sortie (1,2,11.1) de chaque capteur indépendant (8) est réglé entre certaines limites de préréglage (3, 4) en ajustant une ou plusieurs variables d'ajustement (5, 6) du circuit de mesure (6),
- la valeur pour cette ou ces variables d'ajustement provenant de chaque cylindre indépendant (9) est mémorisée dans le système de détection (10),
- dans l'utilisation normale, le moteur (7) tourne et l'une ou l'autre des valeurs mémorisées pour la variable d'ajustement pour chaque cylindre (9) est employée dans le système de détection de cliquetis (10).

2. Procédé selon la revendication 1,
**caractérisé par le fait que** dans le procédé le signal de sortie (1, 2, 11.1) du circuit de mesure (11) de chaque capteur (8) est réglé sur un niveau égal en ajustant le gain du circuit de mesure (6) du capteur de chaque cylindre à la fois.

3. Procédé selon la revendication 1,
**caractérisé par le fait que** dans le procédé la donnée moyenne est déterminée à partir de la sortie (11.1) de chaque capteur (8), la donnée moyenne étant comparée à la valeur de consigne de la sortie et le gain du circuit de mesure du capteur de chaque cylindre est ajusté de sorte que la donnée moyenne déterminée est identique à la valeur de consigne de la sortie.

4. Procédé selon l'une quelconque des revendications précédentes,
**caractérisé par le fait que** la valeur du gain du circuit de mesure (11) du capteur pour chaque cylindre est mémorisée dans le système de détection à employer pour détecter des cliquetis du moteur par l'intermédiaire du système de détection pendant l'utilisation normale du moteur (7).

5. Procédé selon l'une quelconque des revendications précédentes,
**caractérisé par le fait que** le système de détection de cliquetis (11) est réglé en rapport avec le démarrage et/ou le fonctionnement en charge.

6. Procédé selon la revendication 5,
**caractérisé par le fait que** la procédure de réglage du système de détection de cliquetis est effectuée en rapport avec chaque démarrage.
